# EUROPÄISCHE PATENTSCHRIFT

(11) **EP 0 233 153 B1**
(45) Veröffentlichungstag und Bekanntmachung des Hinweises auf die Patenterteilung: **06.12.1995**
(21) Anmeldenummer: 87810079.1
(22) Anmeldetag: 09.02.1987
(51) Int. Cl.: C08K 5/34, C08L 71/12

(54) **Stabilisierung von Polyphenylenethern mit makrocyclischen Polyalkylpiperidinverbindungen**
Stabilization of polyphenylene ethers with macrocyclic polyalkyl piperidinyl compounds
Stabilisation d'éthers de polyphénylène par des composés de polyalkylpipéridine macrocycliques

(30) Priorität: 14.02.1986 CH 596/86
(43) Veröffentlichungstag der Anmeldung: 19.08.1987
(73) Patentinhaber: CIBA-GEIGY AG, 4002 Basel (CH)
(72) Erfinder: Mutterer, Francis, Dr., F-68300 St.Louis (FR); Berger, Kurt, CH-4123 Allschwill (CH)

(56) Entgegenhaltungen:
- DE-A- 3 236 070

## Beschreibung

Die Erfindung betrifft die Stabilisierung von Polyphenylenethern, insbesondere die Stabilisierung gegen Lichtschädigung, durch Zusatz von makrocyclischen Polyalkylpiperidinderivaten.

Unter Polyphenylenethern oder Polyphenylenoxiden versteht man eine Klasse von Polymeren, die durch eine lineare aromatische Polyetherstruktur gekennzeichnet sind und der allgemeinen Formel 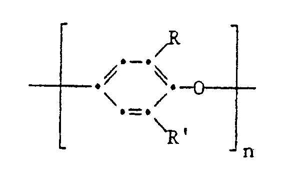
entsprechen, worin R und R' Wasserstoff, Alkyl, Aryl, Aralkyl, Alkoxy oder Halogen sein können und worin n mindestens 50 ist.

Von technischer Bedeutung sind insbesondere Polyphenylenether der obigen Formel, worin R und R' Methyl oder R und R' Phenyl sind.

Diese Polymeren sind insbesondere für solche Anwendungsgebiete von Interesse, wo es auf hohe Wärmebeständigkeit ankommt. Sie besitzen eine im Vergleich mit anderen linearen Polymeren hohe Glasumwandlungstemperatur. Polyphenylenether sind wegen ihrer hohen Schmelzviskosität schwierig zu verarbeiten. Deswegen benutzt man vorzugsweise Mischungen von Polyphenylethern mit anderen Polymeren, insbesondere mit Styrol-Homo- oder Copolymerisaten, die sich gut mit Polyphenylenethern mischen lassen.

Wie die meisten organischen Polymeren werden auch Polyphenylenether durch UV-Strahlung geschädigt. Zur Verhinderung einer solchen Schädigung kann man den Polyphenylenethern und ihren Mischungen mit anderen Polymeren Lichtschutzmittel zusetzen. Hierzu wurden bereits UV-Absorber vom Typ der Benztriazole und organische Nickelverbindungen vorgeschlagen (z.B. US-A- 3,925,509). Noch wirksamer sind die in der PCT-Anmeldung WO 81/02021 und EP-A-146.879 vorgeschlagenen Ether und Ester von 2,2,6,6-Tetraalkyl-4-piperidinolen oder deren Gemische mit UV-Absorbern vom Benztriazol-Typ. Diese sehr wirksamen Lichtschutzmittel haben jedoch den Nachteil, dass sie eine plastifizierende Wirkung auf die Polyphenylenether ausüben und dadurch die Wärmeformbeständigkeit herabsetzen. Für solche Anwendungen, in denen eine möglichst hohe Wärmeformbeständigkeit gewünscht wird, kommen daher solche Lichtschutzmittel nicht in Betracht.

Es wurde nunmehr gefunden, dass bestimmte makrocyclische Polyalkylpiperidinverbindungen hervorragende Stabilisatoren für solche Polyphenylenether sind, jedoch die Wärmeformbeständigkeit der Polymeren nicht oder nur in geringem Ausmass herabsetzen. Solche makrocyclischen Verbindungen sind aus der US-A- 4,442,250 bekannt und wurden dort zur Stabilisierung von Polyolefinen, Polydienen, Vinylchlorid-Polymerisaten, Polyurethanen und anderen Polymeren vorgeschlagen, nicht jedoch für Polyphenylenether. Diese makrocyclischen Verbindungen sind im allgemeinen ziemlich hoch schmelzend und wenig löslich. In Polyolefinen und anderen aliphatischen Polymeren sind sie nur sehr wenig löslich und ihre Verwendung als Stabilisatoren in solchen Substraten ist mit Problemen verbunden und hat daher keine technische Bedeutung erlangt. Es war daher überraschend, dass bestimmte Verbindungen aus dieser Klasse in Konzentrationen bis zu etwa 5 % mit Polyphenylenethern verträglich sind und in diesen Konzentrationen auch bei längerer Lagerung nicht zur Migration neigen.

Die Erfindung betrifft daher stabilisierte Formmassen aus einem Polyphenylenether oder dessen Gemisch mit einem Styrol Homo- oder Copolymerisat, die als Stabilisator eine Verbindung der Formel I enthalten, 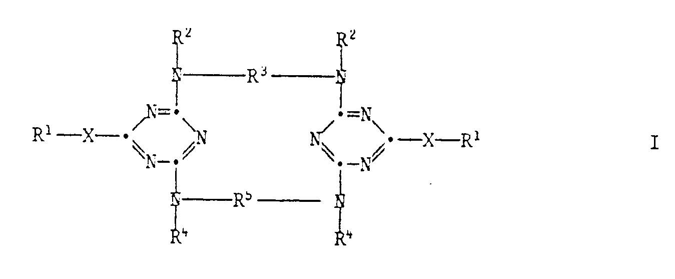
worin X -O-, -S- oder -N(R⁶)- bedeutet,
R¹ Wasserstoff, C₁-C₁₂-Alkyl, C₂-C₄-Hydroxyalkyl, C₃-C₁₂-Alkoxyalkyl, C₃-C₁₂-Alkenyl, C₅-C₈-Cycloalkyl, Phenyl, Naphthyl, C₇-C₁₂-Alkylphenyl, C₇-C₁₀-Phenylalkyl oder eine Gruppe der Formel II bedeutet, 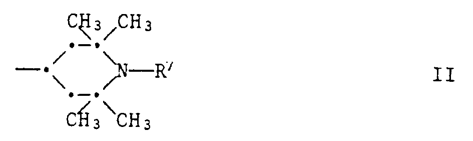
R² C₁-C₄-Alkyl, C₂-C₄-Hydroxyalkyl, C₃-C₁₂-Alkoxyalkyl, C₃-C₆-Alkenyl, C₅-C₈-Cycloalkyl, Phenyl, Naphthyl, C₇-C₁₂-Alkylphenyl, C₇-C₁₀-Phenylalkyl oder eine Gruppe der Formel II bedeutet,
R³ C₂-C₈-Alkylen, -Azaalkylen oder -Oxaalkylen, C₆-C₈-Cycloalkylen, Phenylen, Diphenylen oder Xylylen bedeutet,
R⁴ eine der für R² angegebenen Bedeutungen hat,
R⁵ eine der für R³ angegebenen Bedeutungen hat,
R⁶ C₁-C₁₂-Alkyl, C₃-C₆-Alkenyl, C₂-C₄-Hydroxyalkyl, C₃-C₆-Alkoxyalkyl, C₅-C₈-Cycloalkyl, Phenyl, Naphthyl, C₇-C₁₂-Alkylphenyl,
C₇-C₁₀-Phenylalkyl oder eine Gruppe der Formel II bedeutet oder R¹ und R⁶ zusammen Tetramethylen, Pentamethylen oder 3-Oxapentamethylen bedeuten und
R⁷ Wasserstoff, C₁-C₄-Alkyl, Allyl, Benzyl oder Acetyl bedeutet, wobei mindestens einer der Reste R¹, R², R⁴ oder R⁶ eine Gruppe der Formel II ist.

R¹, R², R⁴, R⁶ und R⁷ als C₁-C₄-Alkyl können dabei unverzweigte oder verzweigte Alkylgruppen darstellen, wie z.B. Methyl, Ethyl, Isopropyl, n-Butyl, sec-Butyl oder tert.Butyl. R¹ als Alkyl kann darüber hinaus auch z.B. Isopentyl, n-Hexyl, n-Heptyl, n-Octyl, 2-Ethylhexyl, Isodecyl oder n-Dodecyl sein.

R¹, R², R⁴ und R⁶ als C₂-C₄-Hydroxyalkyl können z.B. 2-Hydroxyethyl, 2-Hydroxypropyl, 3-Hydroxypropyl oder 2-Hydroxybutyl sein. R¹, R², R⁴ und R⁶ als C₃-C₆-Alkoxyalkyl können z.B. 2-Methoxyethyl, 2-Isopropoxyethyl, 2-Butoxyethyl oder 3-Ethoxypropyl sein. R¹, R² und R⁴ als Alkoxyalkyl können darüber hinaus auch z.B. 2-Octyloxyethyl, 2-Hexyloxypropyl oder 2-Butyloxybutyl sein.

R¹, R², R⁴ und R⁶ als C₃-C₆-Alkenyl können z.B. Allyl, Methallyl, Crotonyl oder 2,3-Dimethylallyl sein. R¹ als Alkenyl kann darüber hinaus auch z.B. 2-Octenyl oder 2-Decenyl sein.

R¹, R², R⁴ und R⁶ als C₅-C₈-Cycloalkyl können z.B. Cyclopentyl, Cyclohexyl oder Cyclooctyl sein. R¹, R², R⁴ und R⁶ als C₇-C₁₀-Phenylalkyl können z.B. Benzyl, 1-Phenylethyl, 2-Phenylethyl oder α,α-Dimethylbenzyl sein. R¹, R², R⁴ und R⁶ als C₇-C₁₂-Alkylphenyl können z.B. 3-Methylphenyl, 4-Isopropylphenyl, 4-tert.Butylphenyl oder 4-Hexylphenyl sein.

R³ und R⁵ als C₂-C₅-Alkylen, Aza- oder Oxaalkylen können unverzweigte oder verzweigte Reste sein, wie z.B. 1,2-Ethylen, 1,2-Propylen, 1,3-Propylen (Trimethylen), Tetramethylen, Hexamethylen, Octamethylen, 3-Oxapentamethylen, 3-Oxaheptamethylen, 3-Azaheptamethylen, 3-Methylazaheptamethylen oder 3-Hydroxyethylazaheptamethylen. R³ und R⁵ als Cycloalkylen können z.B. 1,3-oder 1,4-Cyclohexylen oder 4,4'-Methylendicyclohexylen sein.

Bevorzugt sind Formmassen, die als Stabilisator eine Verbindung der Formel I enthalten, worin X -N(R⁶)- ist, R¹ Wasserstoff, C₁-C₄-Alkyl oder eine Gruppe der Formel II ist, R² und R⁴ Wasserstoff oder eine Gruppe der Formel II sind, R³ und R⁵ C₂-C₆-Alkylen sind, R⁶ C₁-C₁₂-Alkyl, Phenyl, Benzyl, Cyclohexyl oder eine Gruppe der Formel II ist oder R¹ und R⁶ zusammen Pentamethylen oder 3-Oxapentamethylen sind und R⁷ Wasserstoff oder Methyl ist.

Besonders bevorzugt sind Formmassen, die als Stabilisator eine Verbindung der Formel I enthalten, worin X -N(R⁶)- ist, R¹ Wasserstoff oder eine Gruppe der Formel II ist, R² und R⁴ eine Gruppe der Formel II sind, R³ und R⁵ Hexamethylen sind, R⁶ C₁-C₈-Alkyl oder eine Gruppe der Formel II ist und R⁷ Wasserstoff ist.

Die Stabilisatoren der Formel I können nach den in der US-A- 4,442,250 beschriebenen Methoden hergestellt werden. Eine besondere Reinigung ist im allgemeinen nicht nötig.

Die Stabilisatoren der Formel I werden den Polyphenylenethern bevorzugt in einer Menge von 0,1 bis 5 Gew.-%, insbesondere 0,5 bis 3 Gew.-%, zugesetzt. Der Zusatz kann durch trockenes Vermischen der pulverförmigen oder granulierten Materialien erfolgen. Eine besonders homogene Verteilung erhält man durch Extrudieren der Mischung und Granulieren des Extrudates.

Bevorzugte Polyphenylenether entsprechen der Formel 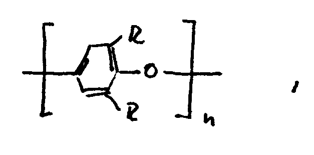
worin R Methyl oder Phenyl und n mindestens 50 ist.

Ausser den Verbindungen der Formel I kann man den Polyphenylenethern noch andere Stabilisatoren zusetzen. Diese können z.B. Antioxidantien, Lichtschutzmittel, UV-Absorber, Metalldesaktivatoren, Phosphite oder Thiosynergisten sein. Beispiele für mitverwendbare Stabilisatoren sind die folgenden:

### 1. Antioxidantien

1.1. Alkylierte Monophenole, z.B.
2,6-Di-tert.butyl-4-methylphenol
2-Tert.butyl-4,6-dimethylphenol
2,6-Di-tert.butyl-4-ethylphenol
2,6-Di-tert.butyl-4-n-butylphenol
2,6-Di-tert.butyl-4-i-butylphenol
2,6-Di-cyclopentyl-4-methylphenol
2-(α-Methylcyclohexyl)-4,6-dimethylphenol
2,6-Di-octadecyl-4-methylphenol
2,4,6-Tri-cyclohexylphenol
2,6-Di-tert.butyl-4-methoxymethylphenol
1.2. Alkylierte Hydrochinone, z.B.
2,6-Di-tert.butyl-4-methoxyphenol
2,5-Di-tert.butyl-hydrochinon
2,5-Di-tert.amyl-hydrochinon
2,6-Diphenyl-4-octadecyloxyphenol
1.3. Hydroxylierte Thiodiphenylether z.B.
2,2'-Thio-bis-(6-tert.butyl-4-methylphenol)
2,2'-Thio-bis-(4-octylphenol)
4,4'-Thio-bis-(6-tert.butyl-3-methylphenol)
4,4'-Thio-bis-(6-tert.butyl-2-methylphenol)
1.4. Alkyliden-Bisphenole z.B.
2,2'-Methylen-bis-(6-tert.butyl-4-methylphenol)
2,2'-Methylen-bis-(6-tert.butyl-4-ethylphenol)
2,2'-Methylen-bis-[4-methyl-6-(α-methylcyclohexyl)-phenol]
2,2'-Methylen-bis-(4-methyl-6-cyclohexylphenol)
2,2'-Methylen-bis-(6-nonyl-4-methylphenol)
2,2'-Methylen-bis-(4,6-di-tert.butylphenol)
2,2'-Ethyliden-bis-(4,6-di-tert.butylphenol)
2,2'-Ethyliden-bis-(6-tert.butyl-4-isobutylphenol)
2,2'-Methylen-bis-[6-(α-methylbenzyl)-4-nonylphenol]
2,2'-Methlyen-bis-[6-(α,α-dimethylbenzyl)-4-nonylphenol]
4,4'-Methylen-bis-(2,6-di-tert.butylphenol)
4,4'-Methylen-bis-(6-tert.butyl-2-methylphenol)
1,1-Bis-(5-tert.butyl-4-hydroxy-2-methylphenyl)-butan
2,6-Di-(3-tert.butyl-5-methyl-2-hydroxybenzyl)-4-methylphenol
1,1,3-Tris-(5-tert.butyl-4-hydroxy-2-methylphenyl)-butan
1,1-Bis-(5-tert.butyl-4-hydroxy-2-methylphenyl)-3-n-dodecylmercaptobutan
Ethylenglycol-bis-[3,3-bis-(3'-tert.butyl-4'-hydroxyphenyl)-butyrat]
Di-(3-tert.butyl-4-hydroxy-5-methylphenyl)-dicyclopentadien
Di-[2-(3'-tert.butyl-2'-hydroxy-5'-methyl-benzyl)-6-tert.butyl-4-methyl-phenyl]-terephthalat.
1.5 Benzylverbindungen z.B.
1,3,5-Tri-(3,5-di-tert.butyl-4-hydroxybenzyl)-2,4,6-trimethylbenzol
Di-(3,5-di-tert.butyl-4-hydroxybenzyl)-sulfid
3,5-di-tert.butyl-4-hydroxybenzyl-mercaptoessigsäure-isooctylester
Bis-(4-tert.butyl-3-hydroxy-2,6-dimethylbenzyl)dithiol-terephthalat
1,3,5-Tris-(3,5-di-tert.butyl-4-hydroxybenzyl)-isocyanurat
1,3,5-Tris-(4-tert.butyl-3-hydroxy-2,6-dimethylbenzyl)-isocyanurat
3,5-Di-tert.butyl-4-hydroxybenzyl-phosphonsäure-dioctadecylester
3,5-Di-tert.butyl-4-hydroxybenzyl-phosphonsäure-monoethylester,
Calcium-salz.
1.6. Acylaminophenole, z.B.
4-Hydroxy-laurinsäureanilid
4-Hydroxy-stearinsäureanilid
2,4-Bis-octylmercapto-6-(3,5-di-tert.butyl-4-hydroxyanilino)-s-triazin
N-(3,5-di-tert.butyl-4-hydroxyphenyl)-carbaminsäureoctylester.
1.7. Ester der β-(3,5-Di-tert.butyl-4-hydroxyphenyl)-propionsäure von ein- oder mehrwertigen Alkoholen, wie z.B. von

| | |
|---|---|
| Methanol | Diethylenglycol |
| Octadecanol | Triethylenglycol |
| 1,6-Hexandiol | Pentaerythrit |
| Neopentylglycol | Tris-hydroxyethyl-isocyanurat |
| Thiodiethylenglycol | Di-hydroxyethyl-oxalsäurediamid |

1.8. Ester der β-(5-tert.butyl-4-hydroxy-3-methylphenyl)-propionsäure von ein- oder mehrwertigen Alkoholen, wie z.B. von

| | |
|---|---|
| Methanol | Diethylenglycol |
| Octadecanol | Triethylenglycol |
| 1,6-Hexandiol | Pentaerythrit |
| Neopentylglycol | Tris-hydroxyethyl-isocyanurat |
| Thiodiethylenglycol | Di-hydroxyethyl-oxalsäurediamid |

1.9. Amide der β-(3,5-Di-tert.butyl-4-hydroxyphenyl)-propionsäure, wie z.B.
N,N'-Di-(3,5-di-tert.butyl-4-hydroxyphenylpropionyl)-hexamethylendiamin
N,N'-Di-(3,5-di-tert.butyl-4-hydroxyphenylpropionyl)-trimethylendiamin
N,N'-Di-(3,5-di-tert.butyl-4-hydroxyphenylpropionyl)-hydrazin

### 2. UV-Absorber und Lichtschutzmittel

2.1. 2-(2'-Hydroxyphenyl)-benztriazole, wie z.B. das 5'-Methyl-, 3',5'-Di-tert.butyl-, 5'-Tert.butyl-, 5'-(1,1,3,3-Tetramethylbutyl)-, 5-Chlor-3',5'-di-tert.butyl-, 5-Chlor-3'-tert.butyl-5'-methyl-, 3'-sec.Butyl-5'-tert.butyl, 4'-Octoxy-, 3',5'-Di-tert.amyl-, 3',5'-Bis-(α,α-dimethylbenzyl)-Derivat.
2.2. 2-Hydroxybenzophenone, wie z.B. das 4-Hydroxy-, 4-Methoxy-, 4-Octoxy-, 4-Decyloxy-, 4-Dodecyloxy-, 4-Benzyloxy-, 4,2',4'-Trihydroxy-, 2'-Hydroxy-4,4'-dimethoxy-Derivat.
2.3. Ester von gegebenenfalls substituierten Benzoesäuren, wie z.B. 4-Tert.butyl-phenylsalicylat, Phenylsalicylat, Octylphenylsalicylat, Dibenzoylresorcin, Bis-(4-tert.butylbenzoyl)-resorcin, Benzoylresorcin, 3,5-Di-tert.butyl-4-hydroxybenzoesäure-2,4-di-tert.butylphenylester, 3,5-Di-tert.butyl-4-hydroxybenzoesäurehexadecylester.
2.4. Acrylate, wie z.B. α-Cyan-β,β-diphenylacrylsäure-ethylester bzw. -isooctylester, α-Carbomethoxy-zimtsäuremethylester, α-Cyano-β-methyl-p-methoxy-zimtsäuremethylester bzw. -butylester, α-Carbomethoxy-p-methoxy-zimtsäure-methylester, N-(β-Carbomethoxy-β-cyanovinyl)-2-methyl-indolin,
2.5. Nickelverbindungen, wie z.B. Nickelkomplexe des 2,2'-Thio-bis-[4-(1,1,3,3-tetramethylbutyl)-phenols], wie der 1:1- oder der 1:2-Komplex, gegebenenfalls mit zusätzlichen Liganden wie n-Butylamin, Triethanolamin oder N-Cyclohexyl-diethanolamin, Nickeldibutyldithiocarbamat, Nickelsalze von 4-Hydroxy-3,5-di-tert.butylbenzylphosphonsäure-monoalkylestern wie vom Methyl- oder Ethylester, Nickelkomplexe von Ketoximen wie von 2-Hydroxy-4-methyl-phenyl-undecylketonoxim, Nickelkomplexe des 1-Phenyl-4-lauroyl-5-hydroxy-pyrazols, gegebenenfalls mit zusätzlichen Liganden.
2.6. Sterisch gehinderte Amine, wie z.B. Bis-(2,2,6,6-tetramethylpiperidyl)-sebacat
   Bis-(1,2,2,6,6-pentamethylpiperidyl)-sebacat
   n-Butyl-3,5-di-tert.butyl-4-hydroxybenzyl-malonsäure-bis(1,2,2,6,6-pentamethylpiperidyl)-ester, Kondensationsprodukt aus 1-Hydroxyethyl-2,2,6,6-tetramethyl-4-hydroxypiperidin und Bernsteinsäure, Kondensationsprodukt aus N,N'-(2,2,6,6-Tetramethyl-4-piperidyl)-hexamethylendiamin und 4-tert.Octylamino-2,6-dichlor-1,3,5-s-triazin,
   Tris-(2,2,6,6-tetramethyl-4-piperidyl)-nitrilotriacetat,
   Tetrakis-(2,2,6,6-tetramethyl-4-piperidyl)-1,2,3,4-butantetracarbonsäure,
   1,1'-(1,2-Ethandiyl)-bis-(3,3,5,5-tetramethyl-piperazinon).
2.7. Oxalsäurediamide, wie z.B. 4,4'-Di-octyloxy-oxanilid, 2,2'-Di-octyloxy-5,5'-di-tert.butyl-oxanilid, 2,2'-Di-dodecyloxy-5,5'-di-tert.butyl-oxanilid, 2-Ethoxy-2'-ethyl-oxanilid, N,N'-Bis-(3-dimethylaminopropyl)-oxalamid, 2-Ethoxy-5-tert.butyl-2'-ethyl-oxanilid und dessen Gemisch mit 2-Ethoxy-2'-ethyl-5,4'-di-tert.butyl-oxanilid, Gemische von ortho-und para-Methoxy- sowie von o- und p-Ethoxy-di-substituierte Oxaniliden.
3. Metalldesaktivatoren, wie z.B. N,N'-Diphenyloxalsäurediamid, N-Salicylal-N'-salicyloylhydrazin, N,N'-Bis-salicyloylhydrazin, N,N'-Bis-(3,5-di-tert.butyl-4-hydroxyphenylpropionyl)-hydrazin, 3-Salicyloylamino-1,2,4-triazol, Bis-benzyliden-oxalsäuredihydrazid.
4. Phosphite und Phosphonite, wie z.B. Triphenylphosphit, Diphenylalkylphosphite, Phenyldialkylphosphite, Tri-(nonylphenyl)-phosphit, Trilaurylphosphit, Trioctadecylphosphit, Distearyl-pentaerythritdiphosphit, Tris-(2,4-di-tert.butylphenyl)-phosphit, Diisodecylpentaerythrit-diphosphit, Di-(2,4-di-tert.butylphenyl)-pentaerythritdiphosphit, Tristearyl-sorbit-triphosphit, Tetrakis-(2,4-di-tert.butylphenyl)-4,4'-biphenylen-diphosphonit, 3,9-Bis-(2,4-di-tert.butylphenoxy-2,4,8,10-tetraoxa-3,9-diphosphaspiro[5.5]undecan.
5. Peroxidzerstörende Verbindungen, wie z.B. Ester der β-Thio-dipropionsäure, beispielsweise der Lauryl-, Stearyl-, Myristyl- oder Tridecylester, Mercaptobenzimidazol, das Zinksalz des 2-Mercaptobenzimidazols, Zink-dibutyl-dithiocarbamat, Dioctadecyldisulfid, Pentaerythrit-tetrakis-(β-dodecylmercapto)-propionat.

Weitere Zusätze, die mitverwendet werden können, sind Füllstoffe und Verstärkungsmittel wie z.B. Calciumcarbonat, Bariumsulfat, Talk, Kaolin, Asbest, Metalloxide, Russ, Graphit, Glasfasern oder Kohlefasern. Weitere mögliche Zusätze sind z.B. Pigmente, Optische Aufheller, Flammschutzmittel, Antistatika oder Gleitmittel.

Das folgende Beispiel zeigt die Herstellung und Prüfung eines erfindungsgemäss stabilisierten Polyphenylenethers. Darin bedeuten Teile Gewichtsteile und % Gewichts-%. Die Temperaturen sind in °C angegeben.

Beispiel: 97 Teile eines Polyblends in Granulatform aus Poly(2,6-di-methyl-1,4-phenylen)-ether und einem Kautschuk-modifizierten Polystyrol (Noryl®SE 100, General Electric Comp.) werden mit 3 Teilen des pulverförmigen Stabilisators der Formel 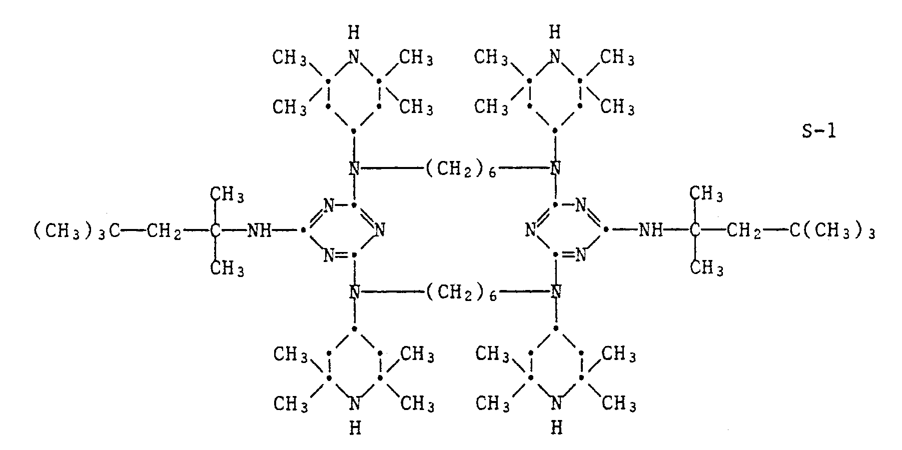
gemischt und das Gemisch durch Extrusion (Temp. 240/250/240°) homogenisiert und granuliert. Das Granulat wird in einer Spritzgussmaschine (Temp. 265/270/270°) zu Blättchen von 40 x 50 x 2 mm verarbeitet.

Von den Proben werden a) die Glasumwandlungstemperatur (Tg) in einem thermomechanischen Analysengerät "Mettler TA 3000" und b) die Erweichungstemperatur (Ts) nach Vicat (ASTM D 1525) ermittelt. Die Proben werden ausserdem in einem Bewitterungsgerät "Xenotest 450" 400 und 600 Stunden mit UV-Licht bestrahlt und die dabei eintretende Vergilbung durch Bestimmung des Yellowness Index gemessen.

Die Resultate sind in der folgenden Tabelle zusammengestellt.

| Stabilisatoren | Tg (TMA) | Ts (Vicat) | Yellowness-Index nach | | |
|---|---|---|---|---|---|
| | | | 0 | 400 | 600 h |
| keiner | 128.8° | 117° | 3.4 | 22.3 | 29.8 |
| 3 % S-l | 126.9° | 116° | 5.2 | 11.2 | 18.4 |

Die Werte zeigen, dass eine sehr gute Lichtstabilisierung erreicht wird, ohne dass die Wärmeformbeständigkeit merklich beeinträchtigt wird.

Aehnliche Ergebnisse erzielt man bei Verwendung von 1 oder 2 % des Stabilisators sowie bei Verwendung der in den Beispielen 1, 6, 7, 11, 12 und 27 der US-A- 4,442,250 beschriebenen Verbindungen als Stabilisatoren.

## Patentansprüche

1. Stabilisierte Formmasse aus einem Polyphenylenether, die als Stabilisator eine Verbindung der Formel I enthält 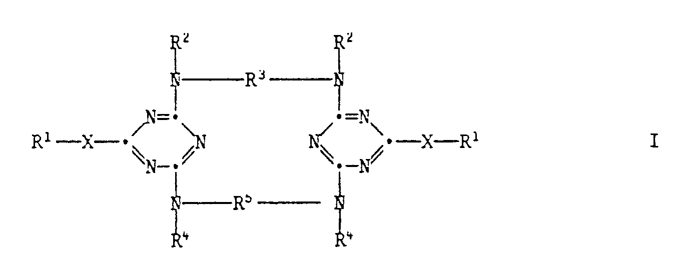 worin X -O-, -S- oder -N(R⁶)- bedeutet,
R¹ Wasserstoff, C₁-C₁₂-Alkyl, C₂-C₄-Hydroxyalkyl, C₃-C₁₂-Alkoxyalkyl, C₃-C₁₂-Alkenyl, C₅-C₈-Cycloalkyl, Phenyl, Naphthyl, C₇-C₁₂-Alkylphenyl, C₇-C₁₀-Phenylalkyl oder eine Gruppe der Formel II bedeutet, 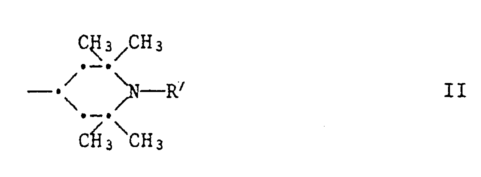 R² C₁-C₄-Alkyl, C₂-C₄-Hydroxyalkyl, C₃-C₁₂-Alkoxyalkyl, C₃-C₆-Alkenyl, C₅-C₈-Cycloalkyl, Phenyl, Naphthyl, C₇-C₁₂-Alkylphenyl, C₇-C₁₀-Phenylalkyl oder eine Gruppe der Formel II bedeutet,
R³ C₂-C₈-Alkylen, Azaalkylen oder Oxaalkylen, C₆-C₈-Cycloalkylen, Phenylen, Diphenylen oder Xylylen bedeutet,
R⁴ eine der für R² angegebenen Bedeutungen hat,
R⁵ eine der für R³ angegebenen Bedeutungen hat,
R⁶ C₁-C₁₂-Alkyl, C₃-C₆-Alkenyl, C₂-C₄-Hydroxyalkyl, C₃-C₆-Alkoxyalkyl, C₅-C₈-Cycloalkyl, Phenyl, Naphthyl, C₇-C₁₂-Alkylphenyl, C₇-C₁₀-Phenylalkyl oder eine Gruppe der Formel II bedeutet oder R¹ und R⁶ zusammen Tetramethylen, Pentamethylen oder 3-Oxapentamethylen bedeuten und
R⁷ Wasserstoff, C₁-C₄-Alkyl, Allyl, Benzyl oder Acetyl bedeutet, wobei mindestens einer der Reste R¹, R², R⁴, R⁶ eine Gruppe der Formel II ist.

2. Stabilisierte Formmasse gemäss Anspruch 1, die als Stabilisator eine Verbindung der Formel I enthält, worin X -N(R⁶)- ist, R¹ Wasserstoff, C₁-C₄-Alkyl oder eine Gruppe der Formel II ist, R² und R⁴ Wasserstoff oder eine Gruppe der Formel II sind, R³ und R⁵ C₂-C₆-Alkylen sind, R⁶ C₁-C₁₂-Alkyl, Phenyl, Benzyl, Cyclohexyl oder eine Gruppe der Formel II ist oder R¹ und R⁶ zusammen Pentamethylen oder 3-Oxapentamethylen sind und R⁷ Wasserstoff oder Methyl ist.

3. Stabilisierte Formmasse gemäss Anspruch 2, worin X -N(R⁶)- ist, R¹ Wasserstoff oder eine Gruppe der Formel II ist, R² und R⁴ eine Gruppe der Formel II sind, R³ und R⁵ Hexamethylen sind, R⁶ C₁-C₈-Alkyl oder eine Gruppe der Formel II ist und R⁷ Wasserstoff ist.

4. Stabilisierte Formmasse gemäss Anspruch 1, enthaltend als Stabilisator eine Verbindung der Formel

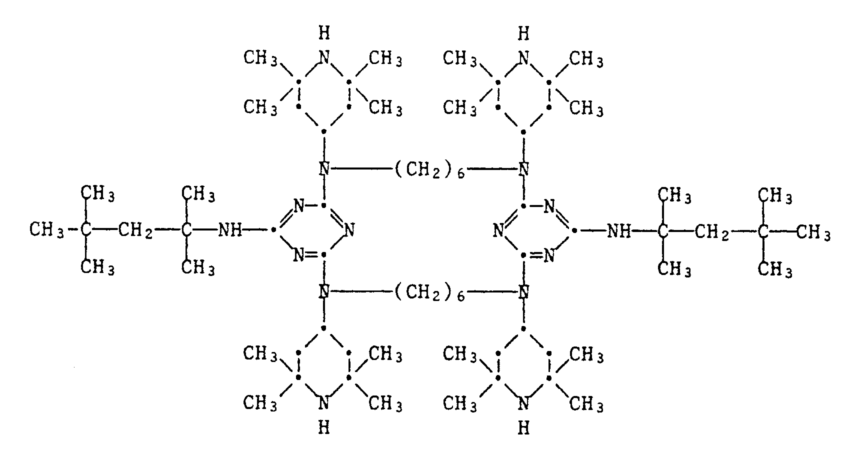

5. Stabilisierte Formmasse gemäss Anspruch 1, worin der Polyphenylenether der Formel 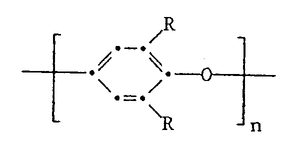 entspricht, worin R Methyl oder Phenyl und n mindestens 50 ist.

6. Stabilisierte Formmasse gemäss Anspruch 1, enthaltend 0,1-5 %, vorzugsweise 0,5-3 % des Stabilisators der Formel I.

7. Stabilisierte Formmasse enthaltend als Stabilisator eine Verbindung der Formel I gemäss Anspruch 5 worin der Polyphenylenether im Gemisch mit einem Styrol Homo- oder Copolymerisat vorliegt.

## Claims

1. A stabilized moulding composition comprising a polyphenylene ether, which composition contains as stabilizer a compound of formula I 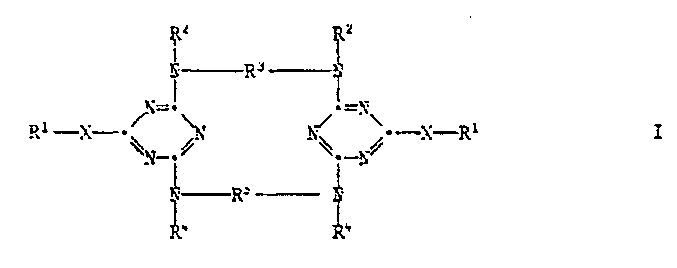 wherein
X is -O-, -S- or -N(R⁶)-,
R¹ is hydrogen, C₁-C₁₂alkyl, C₂-C₄hydroxyalkyl, C₃-C₁₂alkoxyalkyl, C₃-C₁₂alkenyl, C₅-C₈cycloalkyl, phenyl, naphthyl, C₇-C₁₂alkylphenyl, C₇-C₁₀phenylalkyl or a group of formula II 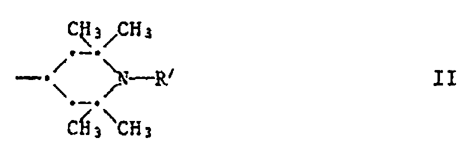 R² is C₁-C₄alkyl, C₂-C₄hydroxyalkyl, C₃-C₁₂alkoxyalkyl, C₃-C₆-alkenyl, C₅-C₈cycloalkyl, phenyl, naphthyl, C₇-C₁₂alkylphenyl, C₇-C₁₀phenylalkyl or a group of formula II,
R³ is C₂-C₈alkylene, azaalkylene or oxaalkylene, C₆-C₈cycloalkylene, phenylene, diphenylene or xylylene,
R⁴ has one of the meanings assigned to R²,
R⁵ has one of the meanings assigned to R³,
R⁶ is C₁-C₁₂alkyl, C₃-C₆alkenyl, C₂-C₄hydroxyalkyl, C₃-C₆alkoxyalkyl, C₅-C₈cycloalkyl, phenyl, naphthyl, C₇-C₁₂alkylphenyl, C₇-C₁₀phenylalkyl or a group of formula II, or R¹ and R⁶ together are tetramethylene, pentamethylene or 3-oxapentamethylene, and
R⁷ is hydrogen, C₁-C₄alkyl, allyl, benzyl or acetyl, with the proviso that at least one of R¹, R², R⁴ and R⁶ is a group of formula II.

2. A stabilized moulding composition according to claim 1, which contains as stabilizer a compound of formula I wherein X is -N(R⁶)-, R¹ is hydrogen, C₁-C₄alkyl or a group of formula II, R² and R⁴ are hydrogen or a group of formula II, R³ and R⁵ are C₂-C₆alkylene, R⁶ is C₁-C₁₂alkyl, phenyl, benzyl, cyclohexyl or a group of formula II, or R¹ and R⁶ together are pentamethylene or 3-oxapentamethylene, and R⁷ is hydrogen or methyl.

3. A stabilized moulding composition according to claim 2, wherein X is -N(R⁶)-, R¹ is hydrogen or a group of formula II, R² and R⁴ are a group of formula II, R³ and R⁵ are hexamethylene, R⁶ is C₁-C₈alkyl or a group of formula II, and R⁷ is hydrogen.

4. A stabilized moulding composition according to claim 1, comprising as stabilizer a compound of formula

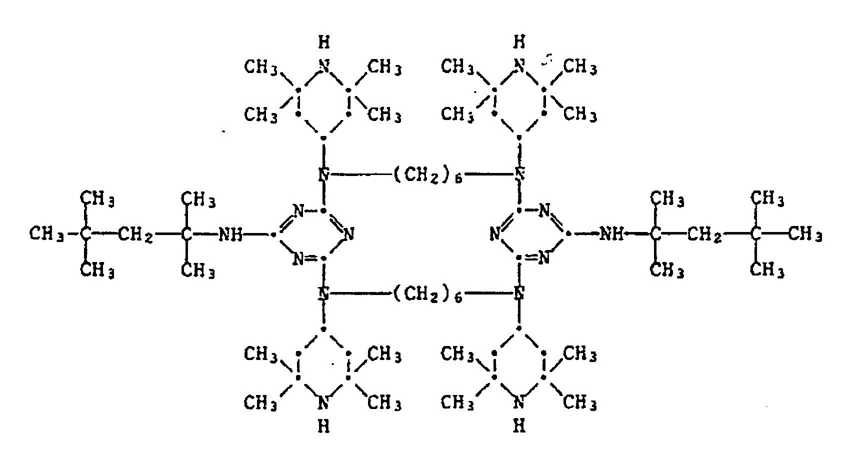

5. A stabilized moulding composition according to claim 1, wherein the polyphenylene ether is of formula 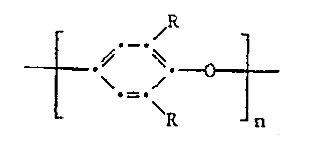 wherein R is methyl or phenyl and n is at least 50.

6. A stabilized moulding composition according to claim 1, which contains 0.1 to 5 %, preferably 0.5 to 3 %, of the stabilizer of formula I.

7. A stabilized moulding composition, comprising as stabilizer a compound of formula I according to claim 5, in which the polyphenylene ether is present in a mixture with a styrene homo- or copolymer.

## Revendications

1. Masse de moulage stabilisée d'un éther de polyphénylène qui contient en tant que stabilisant un composé de formule I : 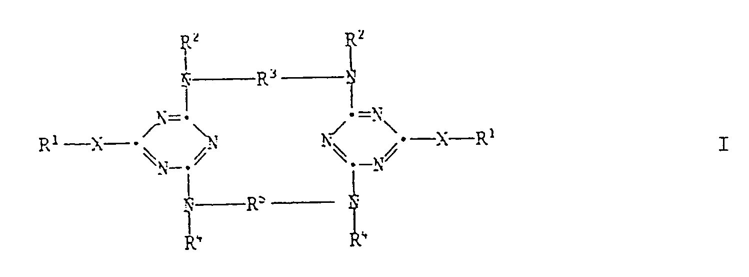 dans laquelle X représente -O-, -S- ou -N(R⁶)-,
R¹ représente hydrogène, alkyle en C₁-C₁₂, hydroxyalkyle en C₂-C₄, alcoxyalkyle en C₃-C₁₂, alcényle en C₃-C₁₂, cycloalkyle en C₅-C₈, phényle, naphtyle, alkylphényle en C₇-C₁₂, phénylalkyle en C₇-C₁₀ ou un groupe de formule II : 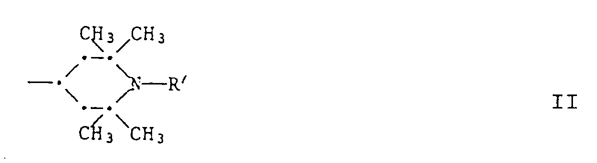 R² représente alkyle en C₁-C₄, hydroxyalkyle en C₂-C₄, alcoxyalkyle en C₃-C₁₂, alcényle en C₃-C₆, cycloalkyle en C₅-C₈, phényle, naphtyle, (alkyl en C₇-C₁₂)-phényle, phénylalkyle en C₇-C₁₀ ou un groupe de formule II,
R³ représente oxaalkylène, azaalkylène ou alkylène en C₂-C₈, cycloalkylène en C₆-C₈, phénylène, diphénylène ou xylylène,
R⁴ a l'une des significations données pour R²,
R⁵ a l'une des significations données pour R³,
R⁶ représente alkyle en C₁-C₁₂, alcényle en C₃-C₆, hydroxyalkyle en C₂-C₄, alcoxyalkyle en C₃-C₆, cycloalkyle en C₅-C₈, phényle, naphtyle, (alkyl en C₇-C₁₂)-phényle, phénylalkyle en C₇-C₁₀ ou un groupe de formule II, ou R¹ et R^{b} ensemble représentent tétraméthylène, pentaméthylène ou 3-oxapentaméthylène, et R' représente hydrogène, alkyle en C₁-C₄, allyle, benzyle ou acétyle, au moins l'un des radicaux est R¹, R², R⁴ ou R⁶ étant un groupe de formule II.

2. Masse de moulage stabilisée selon la revendication 1, qui contient en tant que stabilisant un composé de formule I, dans laquelle X représente -N(R⁶)-, R¹ représente hydrogène, alkyle en C₁-C₄ ou un groupe de formule II, R² et R⁴ représentent hydrogène ou un groupe de formule II, R³ et R⁵ représentent alkylène en C₂-C₆, R⁶ représente alkyle en C₁-C₁₂, phényle, benzyle, cyclohexyle ou un groupe de formule II ou R¹ et R⁶ ensemble représentent pentaméthylène ou 3-oxapentaméthylène et R⁷ représente hydrogène ou méthyle.

3. Masse de moulage stabilisée selon la revendication 2 où X représente -N(R⁶)-, R¹ représente hydrogène ou un groupe de formule II, R² et R⁴ représentent un groupe de formule II, R³ et R⁵ représentent hexaméthylène, R⁶ représente alkyle en C₁-C₈ ou un groupe de formule II et R⁷ représente hydrogène.

4. Masse de moulage stabilisée selon la revendication 1, contenant en tant que stabilisant un composé de formule :

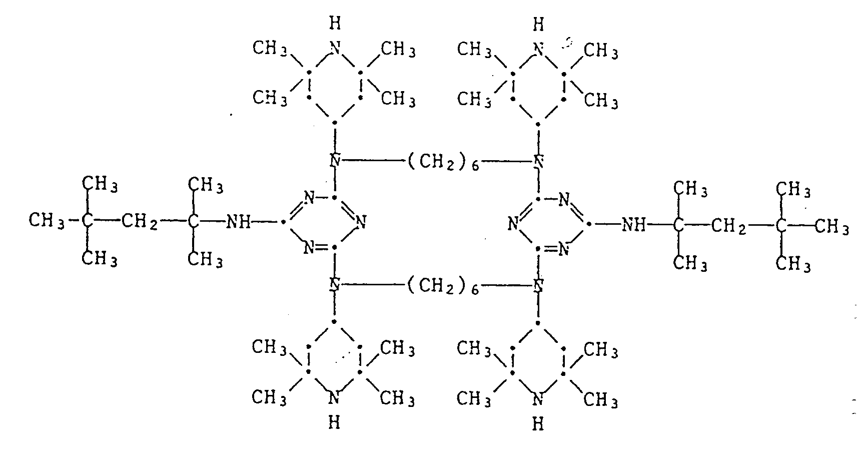

5. Masse de moulage stabilisée selon la revendication 1 où l'éther de polyphénylène répond à la formule : 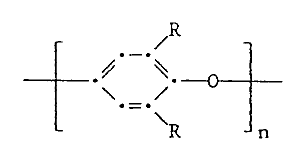 dans laquelle R représente méthyle ou phényle et n vaut au moins 50.

6. Masse de moulage stabilisée selon la revendication 1 contenant de 0,1 à 5 % en poids, de préférence de 0,5 à 3 % en poids du stabilisant de formule I.

7. Masse de moulage stabilisée contenant en tant que stabilisant un composé de formule I selon la revendication 5 où l'éther de polyphénylène se trouve en mélange avec un homo- ou copolymère du styrène.
